# EUROPEAN PATENT APPLICATION

(11) **EP 2 141 928 A1**
(43) Date of publication of application: **06.01.2010**
(21) Application number: 08305359.5
(22) Date of filing: 30.06.2008
(51) Int. Cl.: H04N 7/26, G06K 9/32, G06T 7/40, G06K 9/46, G06T 7/00

(54) **Device and method for analysing an encoded image**

(71) Applicant: THOMSON Licensing S.A., 92100 Boulogne-Billancourt (FR)
(72) Inventor: Vermeulen, Samuel, 35250, Chevaigne (FR)
(74) Representative: Rittner, Karsten

(57) **Abstract**

The invention is related to a device for analysing an encoded image and to a corresponding method.

Said device comprises a decoder (VIDDEC), means (ED) for providing information on encoding parameters, means (ROIDET) for determining a region of interest in the decoded image and means (PA) for comparing said region of interest with the encoding parameters.

Comparison of the determined region of interest with the encoding parameters allows for determining whether and to which degree the determined region of interest was favoured by being coded with more bits during the encoding process.

## Description

### Background

The invention is related to a decoder for analysing an encoded image. The invention is further related to a corresponding method.

For improving the image quality as perceived by a user while keeping the bit rate constant, region-of-interest (ROI) encoding is used. Areas of the image which comprise content of increased interest to the user and therefore attract his advertency are encoded with higher bit rates because artefacts in such areas of interesting content are likely to be perceived by the user. The higher bit rate used in areas of interesting content can be compensated by encoding less interesting areas with lower bit rates as artefacts in less interesting areas are more likely to be ignored by the user.

For instance, in an image showing humans in front of a background the humans are encoded at high bit rates while the background is encoded with a lower bit rate. Moreover, the faces of the humans may be encoded with even a higher bit rate than the rest of the humans. Or, in medical images image regions showing organs like the heart are coded with more bits than surrounding tissue.

But, determining the regions-of-interest to users is a computationally expensive task. Thus, there may be encoder claiming to apply ROI encoding but actually encoding the image without making use of said technique.

There is a need for tools enabling to detect whether region-of-interest encoding was used or not.

### Invention

Such tools are provided by the device for analysing an encoded image according to claim 1 and by the method for analysing an encoded image according to claim 8.

Said device comprises a decoder, means for providing information on encoding parameters, means for determining a region of interest in the decoded image and means for comparing said region of interest with the encoding parameters.

Comparison of the determined region of interest with the encoding parameters allows for determining whether and to which degree the determined region of interest was favoured by being coded with more bits during the encoding process.

In an embodiment, the encoding parameter information providing means are adapted for determining a parameter map, the region-of-interest determining means are adapted for determining a feature map and the comparing means are adapted for determining one or more correlation values using said feature map and said map of parameters.

In another embodiment, the comparing means are adapted for determining a correlation map and said device further comprises displaying means adapted for outputting the decoded image with the correlation map transparently overlaid.

In yet another embodiment, said encoded image is comprised in a sequence of encoded images having image numbers, said device further comprises means for visualizing correlation values in dependency on the image number of the encoded images as a graph.

In even another embodiment of the device one or more quantization parameters and/or one or more macro block sizes are determined.

In yet even another embodiment of the device, means for determining a probability, that the encoded image and/or the sequence of encoded images was encoded in a regions-of-interest favouring way, are comprised in the device.

Said method for analysing an encoded image comprises the steps of: (a) determining one or more encoding parameters with which the image was encoded, (b) decoding the image, (c) determining at least one region of interest in the decoded image and (d) comparing said region of interest and said encoding parameters.

In an embodiment, a parameter map of encoding parameters is determined in step (b), a feature map is determined in step (c) and one or more correlation values are determined in step (d) by using said feature map and said map of encoding parameters.

In a further embodiment, said feature map is determined by help of a saliency map and/or a skin-colour map.

In yet a further embodiment, in step (d) a correlation map is determined wherein said further embodiment comprises the step (e) of outputting the decoded image with the correlation map transparently overlaid.

In another embodiment, said encoded image is comprised in a sequence of encoded images having image numbers, said another embodiment further comprises performing the steps of (a), (b), (c) and (d) for encoded images in the sequence and displaying the correlation values in dependency on the image number as a graph.

In yet another embodiment, the feature map is further combined with information related to spatio-temporal events. Furthermore, the feature map may be subject to filtering with a recursive filter guided by temporal saliency in the sequence of encoded images.

There may be one or more quantization parameters which are determined in step (a). Or, one or more block sizes are determined in step (a).

Optionally, step (f) of determining a probability, that the encoded image and/or the sequence of encoded images were encoded in a regions-of-interest favouring way, is comprised.

### Drawings

Exemplary embodiments of the invention are illustrated in the drawings and are explained in more detail in the following description.

### In the figures:

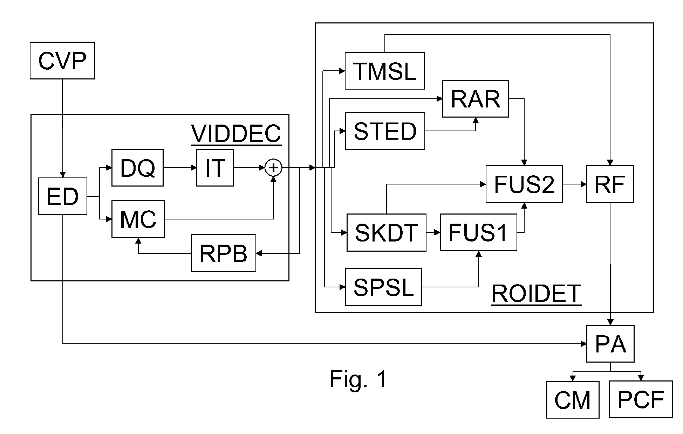

- Fig. 1: depicts an exemplary embodiment of the inventive device for analysing an encoded image.

### Exemplary embodiments

An exemplary embodiment of the inventive device for analysing an encoded image is depicted in fig. 1.

A compressed video picture CVP is received by an instrumented video decoder VIDDEC. The video decoder VIDDEC comprises an entropic decoder ED which provides DCT coefficients to a de-quantization unit DQ and motion parameters to a motion compensation unit MC. The entropic decoder ED further outputs a quantization parameter map, e.g. a map of quantization step-sizes and/or macro-block sizes, to a picture analyser PA.

The de-quantization unit DQ provides the de-quantized coefficients to a unit IT for inverse transformation. The result of the inverse transformation is combined with a motion compensated picture to form a reconstructed picture.

The motion compensated picture is generated by the motion compensation unit MC by help of the motion parameters and of one or more reference pictures from a reference picture buffer RPB.

The reconstructed picture is fed into a region-of-interest detector ROIDET. The region-of-interest detector ROIDET comprises a unit for temporal saliency TMSL, a unit for spatial saliency SPSL, a unit for skin detection SKDT and a unit for spatio-temporal event detection STED. Each of said units is provided with the reconstructed picture for analysis. The result of the skin detection unit SKDT is fused in a first fusion unit FUS1 with the result of the spatial saliency unit SPSL.

A second fusion unit FUS2 fuses the output of the first fusion unit FUS1 with the result of the skin detection unit SKDT and with the result of a rarity unit RAR. The rarity unit RAR receives the reconstructed picture and the result of the spatio-temporal event detection unit STED as inputs. The result of the second fusion unit FUS2 is then recursively filtered in a recursive filtering unit RF. Said filtering is done under guidance of the results from the temporal saliency unit TMSL.

The recursive filtering results in a feature map indicating a level of interest of the pixels in the inputted compressed video picture CVP. Said feature map is outputted to the picture analyser PA.

The picture analyser PA then may determine and output a correlation map CM, a picture correlation factor PCF and/or a probability that ROI encoding was used.

The outputted correlation map CM may be transparently overlaid over the image under inspection. The picture correlation factor PCF may be integrated into a graph related to a series of pictures wherein said series of pictures may be a frame sequence of a video.

The invention is composed of two parts: analysis of the encoded picture and display of the analysis result.

### Analysis:

The ROI detector ROIDEC analyses the uncompressed video picture to find the Region-of-interest. The output of ROI detector ROIDEC is a feature map which gives a weight per pixel and/or per macro-block.

Feature maps are gray scale or binary maps that reflect a picture's special information, such as spatial activity, luminance, skin-colour, etc.

One specific feature map is a spatial salience map, which is based on the human visual perceptual system. The spatial salience map generally reflects which part of an image would be salient to a human due to spatial relationships.

When human faces appear in the video, a skin-colour map is a mean for improving or substituting the spatial salience map.

In summary, skin-colour map and the spatial salience map are combined.

### Skin-colour map

The skin-colour map can be determined as follows: Firstly, pixels for which chrominance values are within predefined intervals are determined. That is, those pixels which have a Cr value between 130 and 175 and a Cb value between 75 and 130 are assigned a value of 1 in a first stage map. Pixels, for which at least one of the chrominance values is outside the mentioned associated value range, are assigned a value of 0 in the first stage map. Thus, the first stage map is binary.

Then, density of the first stage map may be regulated. This comprises application of dilation and erosion operator on the first stage map. A down sampled density map is generated from the result. Each entry in the down sampled density map corresponds to a 3x3-block in the first stage map and reflects the average pixel value in said 3x3-block. Each pixel is then classified as being of no density if none of the pixels in the 3x3-block it is belonging to fulfils the skin-colour condition mentioned above. If only some but not all pixels in the 3x3-block fulfil the skin-colour condition, the pixels in such block are classified as belonging to intermediate density. If all pixels in the 3x3-block fulfil the skin-colour condition, the pixels in such block are classified as belonging to full density.

Full density pixels in the resulting map which are not surrounded by at least three other full density pixels are then eroded. Pixels of no or intermediate density are dilated if they are surrounded by more than two full density pixels.

Subsequently, remaining pixels of intermediate density are set to no density. This results in a second stage map.

A down sampled standard deviation map is generated from the second stage map. Each entry in the down sampled standard deviation map corresponds to the standard deviation within a 6x6-block in the second stage map. For each pixel in the second stage map, then it is determined whether said pixel belongs to a 6x6-block with a standard deviation smaller than 2. If so, said pixel is set to be 0. Otherwise, said pixel is set to be 1. This results in a third stage map.

The third stage map is geometrically corrected. Pixels of value 1 in the third stage map which are surrounded by less than four other value 1 pixels are set to 0. And pixels of value 0 are set to 1 if they are surrounded by at least six value 1 pixels. Then, columns and rows of the image resulting from pixel setting are searched for pixel sequences of value 1 which are 3 pixels long or shorter. Pixels in sequences fulfilling this condition are set to 0.

This results in the skin-colour map.

### Spatial salience map

For establishing the spatial salience map of the input image, the input image is filtered with filters selective for different saliency causing features. Said saliency causing features may comprise high intensity differences, intense colour opponency, fast motion, uniform motion and/or stereo disparity to name a few. Advantageously, corners and crossings are determined also. Feature selective filtering results in a feature specific map indicating the saliency of the pixels with respect to the corresponding feature. The feature selectively filtered images are than combined into a down sampled spatial salience map. That is, each 3x3-block is assigned with a saliency value ranging from 0 indicating no saliency to 1 indicating high saliency.

The establishing of the feature specific maps and/or the saliency map may comprise correction of pixels.

Morphological operations as well as density corrections for achieving a more uniform feature specific maps and/or saliency map may be performed, too.

Establishing feature specific maps and/or the saliency map may comprise a competition scheme, for instance a winner-takes-all mechanism, singling out the most salient area in the respective map.

Another method of effectively establishing a spatial salience map is described in the patent application W02006/072637 filed in the name of Thompson Licensing on the 10th January 2006 and published on 13th July 2006, said document being incorporated into this application by reference.

Spatial saliency map and skin-colour map are combined into a first combined map. For instance, the skin-colour map is treated as another feature selectively filtered image which is combined with the feature selectively filtered image mentioned above.

In another exemplary embodiment spatial saliency map and skin-colour map are combined as a weighted generalized addition function, in spite of the fact that the salience of a stimulus is less than the sum of the salience of its visual features.

The first combined map is further combined or fused with a rarity map into a second combined map. Said rarity map is based on detected spatio-temporal events and the reconstructed picture. For stabilization, the second combined map is recursively filtered by help of a temporal saliency map which reflects the areas of the image showing a movement contrast and/or colour changes between frames. The result is the final saliency map provided to the picture analyser PA.

The picture analysis module PA makes a comparison between the final saliency map from the ROI detector ROIDEC and the parameters used for encoding of the picture as determined by instrumented decoder VIDDEC. Picture analysis module PA outputs a correlation map CM, comprising for instance one correlation value per 3x3 blocks, a global correlation value PCF for the picture and/or a ROI encoding probability value for the picture.

### Displaying:

Several exemplary types of display are envisaged but other forms of result representation are possible, too.

A first way of displaying comprises displaying the reconstructed picture with a transparently overlaid correlation map. Said correlation map comprises correlation values between the determined the feature map and the quantization parameters used for encoding. Said correlation map may be determined on the basis of 3x3 image blocks. In addition or alternatively, the macro-block sizes on which encoding was based is used for determining a correlation between the encoding parameters and the ROI in the reconstructed image.

Another way of displaying is more suitable for video image sequences but may be used for single pictures, too. Said another way comprises visualizing a graph with the correlation level between the feature map and the quantization parameter and/or the macro-block size for the complete picture in function of the picture number.

Yet another way comprises visualizing a graph which depicts ROI encoding probabilities as a function of frame numbers.

The invention helps to know if the encoder really favours the ROI.

## Claims

1. Device for analysing an encoded image, said device comprises
- a decoder (VIDDEC),
- means (ED) for providing information on encoding parameters,
- means (ROIDET) for determining a region of interest in the decoded image and
- means (PA) for comparing said region of interest with the encoding parameters.

2. Device according to claim 1, wherein
- the encoding parameter information providing means (ED) are adapted for determining a parameter map
- the region-of-interest determining means (ROIDET) are adapted for determining a feature map and
- the comparing means (PA) are adapted for determining one or more correlation values using said feature map and said map of parameters.

3. Device according to claim 2, wherein
- the comparing means (PA) are adapted for determining a correlation map and
- said device further comprises displaying means adapted for outputting the decoded image with the correlation map transparently overlaid.

4. Device according to claim 2 or 3, wherein said encoded image is comprised in a sequence of encoded images having image numbers, said device further comprises
- means for visualizing correlation values in dependency on the image number of the encoded images as a graph.

5. Device according to one of the preceding claims, wherein
- one or more quantization parameters are determined.

6. Device according to one of the claims 1-4, wherein
- one or more macro block sizes are determined.

7. Device according to one of the preceding claims, further comprising
- means for determining a probability that the encoded image and/or the sequence of encoded images was encoded in a regions-of-interest favouring way.

8. Method for analysing an encoded image, said method comprises the steps of
- a) determining one or more encoding parameters with which the image was encoded,
- b) decoding the image,
- c) determining at least one region of interest in the decoded image and
- d) comparing said region of interest and said encoding parameters.

9. Method according to claim 8, wherein
- step a) comprises determining a map of encoding parameters,
- step c) comprises determining a feature map and
- step d) comprises determining one or more correlation values using said feature map and said map of encoding parameters.

10. Method according to claim 9, wherein
- said feature map is determined by help of a saliency map and/or a skin-colour map.

11. Method according to claim 9 or 10, wherein
- step d) comprises determining a correlation map and
- said method further comprises outputting the decoded image with the correlation map transparently overlaid.

12. Method according to one of the claims 8-10, wherein said encoded image is comprised in a sequence of encoded images having image numbers, said method further comprises
- performing the steps of a), b), c) and d) for encoded images in the sequence and
- displaying the correlation values in dependency on the image number as a graph.

13. Method according to one of the claims 8-12, wherein
- one or more quantization parameters are determined in step a).

14. Method according to one of the claims 8-13, wherein
- one or more block sizes are determined in step a).

15. Method according to one of the claims 8-14, further comprising
- determining a probability that the encoded image and/or the sequence of encoded images were encoded in a regions-of-interest favouring way.
